# EUROPEAN PATENT SPECIFICATION

(11) **EP 0 443 755 B1**
(45) Date of publication and mention of the grant of the patent: **09.12.1998**
(21) Application number: 91301062.5
(22) Date of filing: 11.02.1991
(51) Int. Cl.: G06F 12/08

(54) **Cache control system**
Cache-Steuerungsanordnung
Système de commande d'antémémoire

(30) Priority: 20.02.1990 JP 37536/90
(43) Date of publication of application: 28.08.1991
(73) Proprietor: International Business Machines Corporation, Armonk, N.Y. 10504 (US)
(72) Inventor: Ohba, Nobuyuki, Kawasaki-shi (JP); Shimizu, Shigenori, Kawasaki-shi, Kanagawa-ken (JP)
(74) Representative: Burt, Roger James, Dr.

(56) References cited:
- EP-A- 0 343 567
- COMPUTER ARCHITECTURE NEWS. vol. 17, no. 3, June 1989, IEEE,WASHINGTON D.C., US pages 2 - 15; EGGERS ET AL.: 'Evaluating the performance of four snooping cache coherency protocols'

## Description

This invention relates to a cache control system for a multiprocessor system having a plurality of processors connected to a shared bus and a shared memory through respective private caches.

Tightly coupled multiprocessor systems having a plurality of processors with private caches, which processors are connected one another through a shared bus, are being used in practical applications.

In such a multiprocessor system a plurality of processors read from or write to the shared memory connected to the shared bus. Without private caches, each processor has to read/write access the shared memory through the shared bus. Therefore the shared memory is very frequently occupied and the increase of the number of processors does not improve the performance beyond a certain limitation.

An approach has been accordingly proposed wherein each processor has a private cache, keeps in the cache a partial copy of data stored in the shared memory, and performs read/write access to the data within the cache, and thereby the shared bus and memory are not used very frequently (A multi-cache system). That approach however causes the problem that when each processor modifies shared data in its cache without relation to the other one or more sharing processors, the sharing processors may have different data at a given address at a particular time. Means for keeping data at a given address in different caches the same is accordingly needed. Hereinafter, the term " the consistency of data" will be used to refer to every processor being able to access the same data at a given address.

One method for ensuring data consistency is the snoopy cache technique. The snoopy cache technique maintains data consistency among caches by monitoring the shared bus with cache controllers provided for each processor. That is, when a processor modifies data in its cache, it sends information about how it is modifying the data and what address the modified data is at, on the shared bus. If another one or more processors share that data, the cache controllers of the other processors see that information and either update or invalidate the data in their caches to maintain data consistency.

Conventional snoopy cache techniques each adopt either a first protocol wherein upon modification of shared data at a cache, copies at the other caches are invalidated, or otherwise a second protocol wherein the copies are modified. For example, Dragon of Xerox Corporation, the United States of America ("The Dragon Processor", Proceedings of Second International conference on ASPLOS, 1987, pp.65-69, R.R Atkinson, etc.) and FireFly of Digital Equipment Corporation, the United States of America ("Firefly: a Multiprocessor Workstation", Proceedings of Second International Conference on ASPLOS, 1987, pp.164-172, C. P. Thacker, etc.) use the update type protocol, and on the other hand, SPUR of the University of California ("Design Decision in SPUR", IEEE Computer, pp. 8-22,1986, Nov., M. Hill, etc.) uses the invalidate type protocol. In addition to the above, Japanese Patent Application No. JP-A-2 186 456) provides a cache control system designed to selectively switch between the update and invalidate types with implementation in software. The document COMPUTER ARCHITECTURE CONFERENCE PROCEEDINGS, vol 17, nº 3, June 1989, pages 10-11, describes a simulation model with switching between write-broadcast an write-invalidate protocols.

The above two protocol types can maintain the consistency of data among a plurality of caches equally well, that is, the updating and invalidating of data have the same effect in respect of data consistency. However they both have advantages and disadvantages in accordance with their approaches.

The update type, firstly, is suitable for cases where data tightly shared by processors (or where the processors almost equally access shared data) is manipulated. The invalidate type is not suitable for those cases, because each time each processor modifies a shared data area the copies in the caches of the other sharing processors are invalidated, thereby a read/write access to that area by the other sharing processors inevitably causes a cache miss and requires access to the shared bus. In this regard, the copies in the sharing caches are accordingly updated thereby enabling the data area to be read without accessing to the shared bus. Generally speaking, the update type works well when using for buffers used the parallel program of the producer and consumer model, and semaphore or the like used to synchronize processors, etc.

The invalidate type, on the other hand, is preferably applied to shared data which is exclusively used by one processor or shared data to which access is not made frequently by the other processors. Paging of process migration may make data exclusively held by one processor as shared while it should be kept as exclusive, which situation places unnecessary shared data in the system and degrades the performance. The invalidate type is effective in that situation.

The preference between the above types cannot be accordingly decided in a straightforward manner and depends on the characteristics of a program to be executed and the operational statuses of individual processors. The prior art does not provide a protocol enabling efficient operations in every data access situation.

The above mentioned Dragon, FireFly and SPUR each provides only one type, and consequently performance is inevitably degraded in some situations. The prior invention disclosed in Japanese Patent Application No. JP-A-2 186 456 can selectively switch between the above mentioned types by means of software, which still does not resolve the problem of how and when to switch.

In addition to the above, Japanese Patent application No. JP-A-3 217 963, provides a technique which switches between cache protocols automatically depending on the information of working sets.

The present invention provides a cache control system (C) for a private cache (4) in a multiprocessor data processing system comprising a plurality of processors (P1-Pn) each connected to a shared bus (1) via similar private caches (C1-Ch), the cache control system (C) co-operating with similar cache control systems (C1-Cn) provided for other private caches in the data processing system, the cache control system (C) comprising:
a controller (3) for monitoring signals on the shared bus (1) and, when data shared between one of the processors is modified in another cache, for performing one of two types of data consistency procedures for the shared data; and
means for determining the relative likelihood of access to the shared data by the processor corresponding to the private cache and other processors in the system, the type of data consistency procedure performed by the controller being dependent on the results of the determination; and said means for determining comprising:
data control information storage means (5) for storing, for each piece of shared data stored in the private cache, a count value; and
means for comparing (7) the count value with a reference value (6);
said controller (3) being adapted for dynamically switching between and performing one or other of said two types of data consistency procedure depending on whether the count value is below a reference value;
said data control information storage means being adapted to count up and count down by identical amounts such that the count value counts the difference between the number of accesses to the shared piece of data by the processor corresponding to the private cache and the number of accesses to the shared piece of data by other processors in the data processing system.

Therefore, the present invention enables a mechanism to be provided enabling dynamically and most favourably to switch between the protocols of the invalidate and update types. This mechanism enables traffic on the shared bus to be reduced and the system performance to be improved.

In a multiprocessing system embodying the invention, this is achieved by switching the protocol used for each shared data at each private cache, automatically depending upon the likelihood or frequency that the processor corresponding to the private cache concerned accesses the shared data concerned, and the likelihood or frequency that the other processors that the processor concerned access the shared data concerned.

In a second aspect of the invention there is provided a cache control system (C) as claimed in claim 1 further comprising means for incrementing the count value upon detecting on the shared bus of a signal indicating that the data has been modified at another of the private caches in the data processing system and means for decrementing the count value upon access to the shared data by the processor associated with the cache control system.

In other words, for each shared data at each private cache, a frequency that the processor corresponding to the private cache concerned accesses the shared data concerned is determined, and further another frequency that such a signal is sent on the shared bus which indicates that either of the other processors modifies the shared data concerned is determined, and then the difference between the above frequencies is calculated to compare with a predetermined reference value. The result of the comparing is used to automatically switch the protocols used for the shared data concerned at the private cache concerned.

With the protocols of the invalidate and update types, while the processor corresponding to the private cache concerned is more likely to access the shared data concerned, it is more preferable to use the protocol of the update type, because it increases the cache hit ratio. On the other hand, while another processor than that corresponding to the private cache concerned is more likely to access the shared data concerned, it is more preferable to use the protocol of the invalidate type, because it reduces bus traffic required for updating the shared data.

Therefore in a further preferred form of the invention when a piece of shared data is modified at one of the other private caches in the system the controller either invalidates the shared data concerned or modifies the shared data in accordance with the modification to the shared data at the other of the private caches, depending on the result of the determination.

The invention further enables a cache memory system or private cache comprising a data storage means and a cache control system as described above to be provided, a processor capable of co-operating with a plurality of similar processors and comprising the cache memory system to be provided and a multiprocessor data processing system comprising a plurality of the processors, a shared bus and a shared memory means to be provided.

An embodiment of the invention will now be described, by way of example with reference to the accompanying drawings, wherein:
Figure 1 is a block diagram illustrating the overall configuration of one embodiment of this invention;
Figure 2 is a block diagram illustrating the configuration of the private cache used in the embodiment of Figure 1;
Figure 3 is a diagram illustrating the format of the cache tag stored in the case tag memory 5 in Figure 2;
Figure 4 is a state transition diagram for the data blocks in the cache controller of Figure 2;

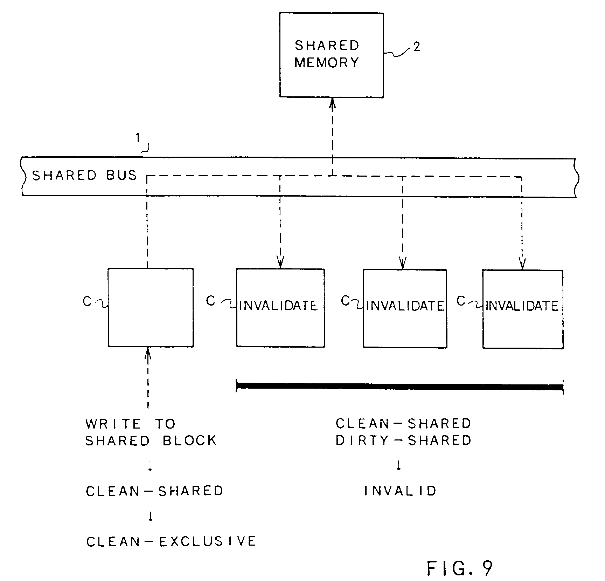

and Figures 5 through 10 are diagrams illustrating the operations of the embodiment.

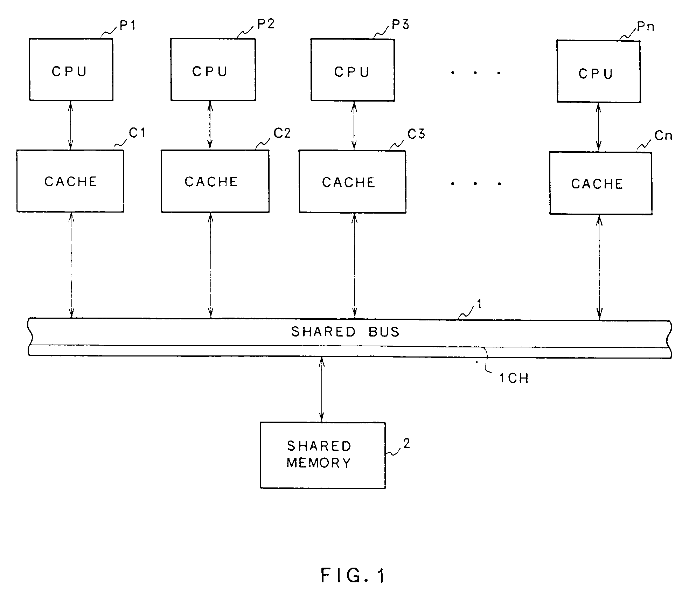

Figure 1 shows the overall configuration of the multiprocessor system of the embodiment, wherein a plurality of processors P1, P2,..Pn are connected to a shared bus 1 and shared memory 2 via respective caches C1, C2,..Cn. The caches C1, C2,..Cn enable the processors P1, P2,..Pn to perform memory access more rapidly at average and have means for maintaining the consistency among the caches C1, C2,..Cn.

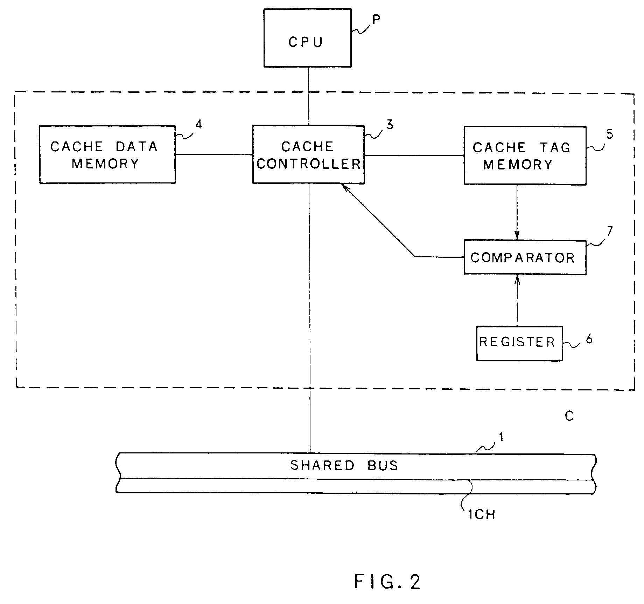

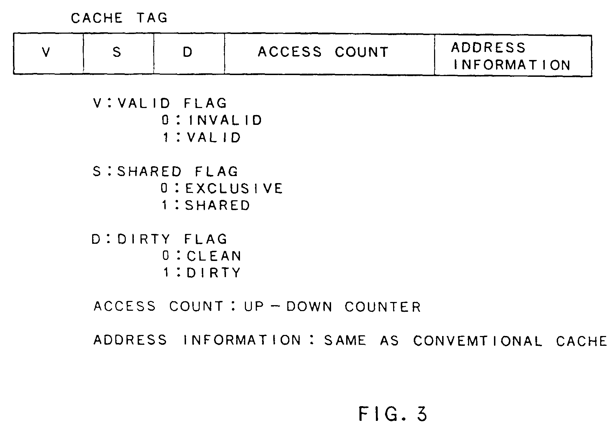

Each of the caches C is configured as shown in Figure 2, wherein a cache controller 3 performs such basic control of the the whole of the cache C, required when the cache C is accessed by the processor P, and when snooping the bus 1. A cache data memory 4 is a high speed memory for storing a partial copy of data stored at the main memory (the shared memory 2). The cache data memory 4 is for example capable of storing 16 data blocks each having 64 bits. The processor P can read / write required data via the data memory 4 at most of times without accessing the main memory ( the data block is a unit of data in accessing). Therefore the processor P can perform more rapid memory access on average. A cache tag memory 5 is designed to store a cache tag as shown in figure 3 for each data block stored in the cache data memory 4. The cache tag includes fields of V, S, D, an access count, and address information , as described in detail later. A reference register 6 is designed to store a reference value in relation to the access counts in the cache tags stored in the cache tag memory 5. A comparator 7 is designed to compare the access count in the cache tag specified with the address information, with the reference value and supply the comparison result to the cache controller 3.

Next, the cache tag will be described in detail.

As shown in Figure 3 the cache tag is constituted of the fields of V, S, D, an Access count, and address information. The address information is the same as used for the data block corresponding to the cache tag concerned. V, S, and D are valid, shared, and dirty flags, and indicate the state of the data block identified with the address information as follows:
- V:: valid flag
0: invalid
1: valid
- S:: shared flag
0: exclusive
1: shared
- D:: dirty flag
0: clean (having the same contents as the shared memory)
1: dirty (having different contents than the shared memory)
The Access count constitutes an up-down counter of a predetermined number of bits, the control method of which will be described below

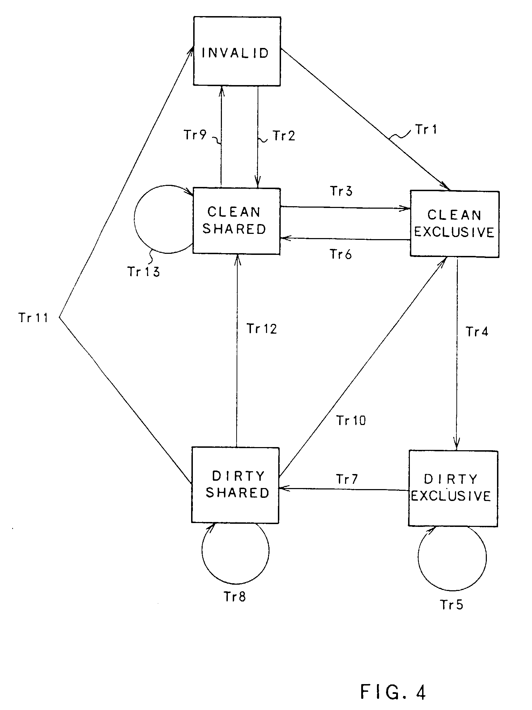

Next the statuses of the data block of cache data memory 4 are described. It is those statuses as well as the access count that the cache controller 3 controls data blocks in dependence on the state transitions are described later in connection with the operations of the embodiment.
The states of a data block in the cache data memory 4 are, also as shown in Figure 4, the following five states.
(1) invalid
(2) clean- exclusive: the data is a single copy in the system, and keeps the same value as in the shared memory.
(3) clean- shared: it is possible that a plurality of copies exist in the system. Write back is not required upon replacing.
(4) dirty- exclusive: the data is a single copy in the system, which is however a different value from the shared memory. Write back is required upon replacing.
(5) dirty- shared: it is possible that a plurality of copies exist in the system. Write back is required upon replacing.
The above five states is maintained with the three flags in the cache tag as shown in Figure 3, and the correspondence between the tags and the states is as set forth in Table 1. In this table "X" indicates " don't care".

**TABLE 1**

| State | Combination of the flag content | | |
|---|---|---|---|
| | V | S | D |
| invalid | 0 | X | X |
| clean-exclusive | 1 | 0 | 0 |
| clean-shared | 1 | 1 | 0 |
| dirty-exclusive | 1 | 0 | 1 |
| dirty-shared | 1 | 1 | 1 |

Next the control of the access count is described.

Conventional snoopy protocols have a cache tag including a D ( dirty) flag, an S ( shared ) flag, and a V ( valid) flag, and thereby control the statuses of data blocks.

In this embodiment, the access count field is provided in addition to those flags ( Figure 3). The control for shared copies in the cases is optimized by using the relationship between the the reference value ( the above mentioned register 6 ) and the value in the added field,or the access count field. This field is a counter which holds a positive value, said value is incremented or decremented in accordance to the following rules.

### Rules of access count

(1) it is incremented by one upon bus write. It is however limited to being less than a predetermined value M.
(2) it is decremented by one each time the corresponding processor accesses the corresponding data block. It is however limited to be greater than zero.
In summary, the access count field holds the difference between the frequency of write requests for the block concerned sent on the bus, and the frequency of access request for the same block from the processor corresponding to the cache concerned.

Hereinafter the state where this field has reached the reference value (M) is referred to as R ( Reached ) state ( in this state, the value in the access count field = the value in the M register). M is held in the reference register 6 of Figure 2, and can be updated with software.

The cache controller 3 operates as to perform the protocol of the update type in the R state, and to perform the protocol of the invalidate type in the R state (not R state). When the reference value (M) is set to zero the protocol is of the conventional invalidate, and when set to infinite (practically impossible due to the bit width limitation of the access count field) the protocol is of the conventional update type.

The reference value for optimizing the cache performance is determined on the cache configuration (the block size, the access width of the processor P), the penalty for bus use (cycle duration of bus read and bus write), the number of caches in the system, etc. The optimization factors are described later.

The operations of this embodiment are described with reference to the state transition diagram of Figure 4.

The cache controller 3 makes reference to the cache tag each time the processor P accesses or each time the snooping on the bus 1 occurs, and thereby determines how to operate. At the same time it determines whether or not the state is R based on the output from the comparator 7 which compares between the value of the access count and the value in the reference register 6.

A data block is aforementioned controlled with the five states. The CH (Cache Hit) signal line is a special purpose signal line provided to the bus 1 and indicates whether the block concerned is in the shared or exclusive state over the caches. The cache controller 3 asserts the CH when it receives a read or write signal from the bus and the cache C has a copy of the data concerned. That asserting informs the requesting cache that the cache C has the copy. The five states themselves are basically identical to ones used the update protocol disclosed in Japanese Patent Application H1-4799.

However, the access count field is added in the cache tag for use of transition among the five states. As shown in Figure 3, the cache tag of the embodiment consists of not only the address information used for conventional caches C but also the three flags of valid, shared, and dirty types and the access count field operating as an up-down counter.

Conditions for each transitions and operations during each transition are as follows.

### # transition 1 : invalid → clean- exclusive

This transition occurs when the processor P performs a read operation and no copy exist in the cache C, thereby a cache miss occurs, and further no CH signal is asserted. After the transition, no copy exist in other caches than the cache, and only cache C has a copy in the whole of the system.

### # transition 2 : invalid → clean- shared

This transition occurs when my processor P performs a read operation and no copy exists in cache C, thereby a cache miss occurs, and further one or more CH signals are asserted. At least one other cache has the same copy.

### # transition 3 : clean- shared → clean- exclusive

This transition occurs when processor P performs a write operation, and a cache hit occurs, and further no other caches assert a CH signal. The block is accordingly set to a exclusive state.

### # transition 4 : clean- exclusive → dirty exclusive

This transition occurs when processor P performs a write operation and a cache hit occurs. Since only processor P has a copy, it can modify the copy without informing the other processors of it. The cache C concerned has a different contents from the shared memory 2, and the state is accordingly changed to dirty.

### # transition 5 : dirty- exclusive → dirty- exclusive

This transition occurs when processor P performs a write operation and a cache hit occurs. Since only the cache concerned has a copy, it only modifies the copy.

### # transition 6 : clean- exclusive → clean- shared

This transition occurs when another processor causes a read miss thereby sending a read signal on the shared bus 1, and only cache C has a copy through the system. Since a copy is to be placed in the other cache, a CH signal is asserted and the block gets into a shared state.

### # transition 7 : dirty-exclusive → dirty- shared

This transition occurs when another processor causes a read miss thereby sending a request signal on the shared bus 1, and only cache C has a copy through the system, the copy being different from the contents stored in the shared memory and the newest. Cache C supplies the other cache with the newest data and asserts a CH signal to get into a shared state.

### # transition 8 : dirty shared → dirty- shared

This transition occurs when another processor causes a read miss thereby sending a read signal on the shared bus, and cache C has the newest value of the copy. Cache C supplies the newest data to the requesting cache and asserts a CH signal.

### # transition 9 : clean shared → invalid

A bus write request occurs for a block in a clean- shared state. And the block happens to have an access count field of the R state. The block is accordingly invalidated and no CH signal is sent.

### # transition 10 : clean- shared → clean- exclusive

Processor P causes a write hit. It is possible that one or more other caches have copies, and cache C accordingly issues a write request on the shared bus. It is thereafter determined that no other cache asserts a CH signal. The state is accordingly changed to clean- exclusive and the access count field is set to the initial zero value.

### # transition 11 : dirty- shared → invalid

A bus write request is issued for a block in a dirty-shared state, and that block is in an R state. The block is accordingly invalidated and no CH signal is asserted.

### # transition 12 : dirty- shared → clean- shared

This transition occurs on either of the following two conditions.
(1) Processor P causes a write hit, and sends a write request on the shared bus because one or more other processors possibly have copies. Updating is performed in the shared memory at the same time. A CH signal is consequently asserted by the other one or more caches, and then the states are changed to clean- shared. The access count field is decremented by one.
(2) A bus write request occurs for a block in a dirty- shared state. And the block is in a ·TR state. The block is updated and the state is changed to a clean- shared. The access count field is incremented by one.

### # transition 13 : clean- shared → clean- shared

This transition occurs on either of the following three conditions.
(1) Processor P causes a write hit, and sends a write request on the shared bus because one or more other processors possibly have copies. Updating is performed in the shared memory at the same time. A CH signal is consequently asserted by the other one or more caches, and then the states keep unchanged. The access count field is decremented by one.
(2) A bus read request occurs.
(3) A bus write request occurs and the block is in a R state. The block is accordingly updated and a CH signal is asserted. The access count field is incremented by one.

In the above, description about a read hit from my processor is omitted for purpose of simplified illustration. It is apparent that a read hit from my processor does not cause any transition. However a read hit for a block in a shared state causes decrementation of the access count field.

As aforementioned, the main feature of the invention involves the manipulation of shared data. Whenever a processor P modifies shared data, the consistency of the data is maintained by updating or invalidating related copies in other caches.

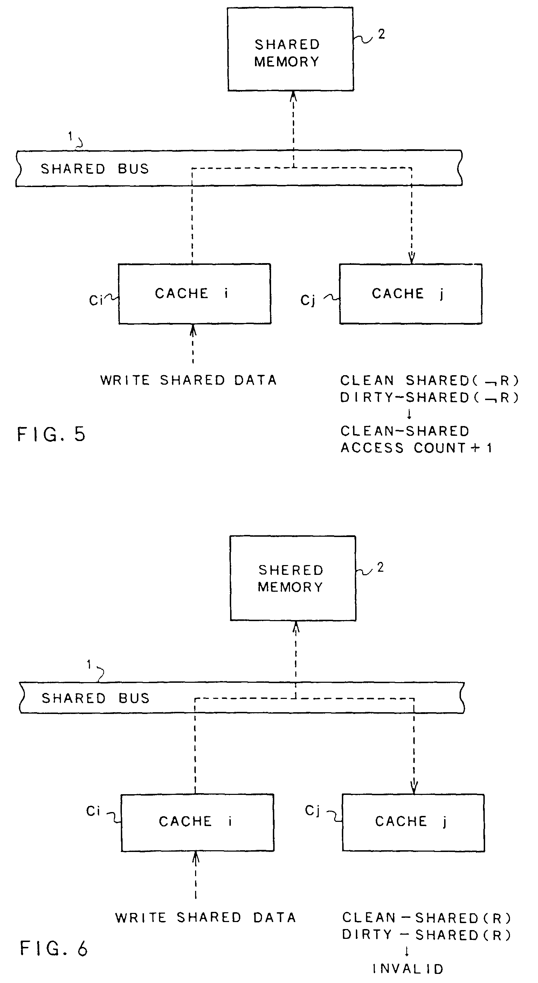

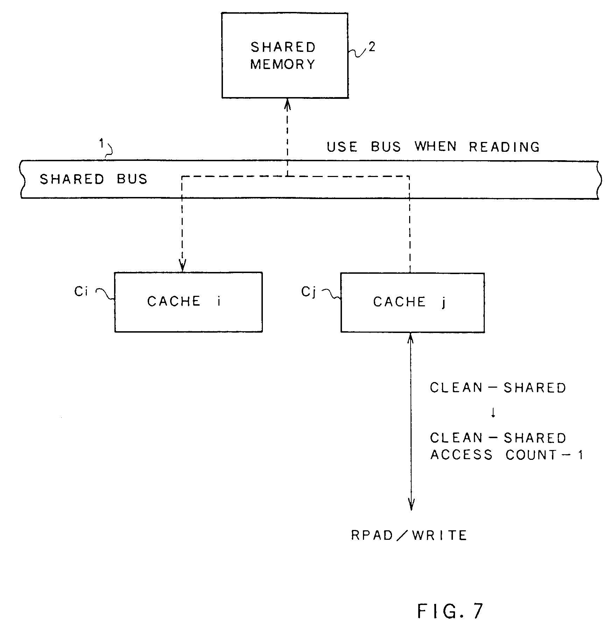

In the method of this invention, shared data exists in a state of clean- shared or dirty- shared. In this regard the protocol of the invention is identical to conventional snoopy protocols. However the access count field is added in the cache tag for minimizing overhead related to shared data, and thereby a block in a shared state is provided with an R attribute indicative whether or not the access count field has reached a reference value (M). When a processor P causes a cache hit as to shared data and accordingly issues a bus write request, shared copies in the other caches, in R state, are updated, and then the related access counts are counted up by one to record the updating (Figure 5). Shared copies in an R state are invalidated (Figure 6). Further when processor P accesses a shared copy the access count is counted down by one ( Figure 7). The difference between the frequency of updating a shared block by the other processors and the frequency of accessing the same by processor P automatically determines whether the block should be updated or invalidated.

In the case where the reference value is "1", the operations are more simple as described as follows. When a shared block in cache C is updated by one of the other processors without being accessed even once by processor P after the block was previously updated by one of the other processors, the block in cache C will be invalidated. On the other hand, when processor P accesses a shared block at least one time in the duration defined by two consecutive update requests to the block from others of the processors, the block remains in cache C.

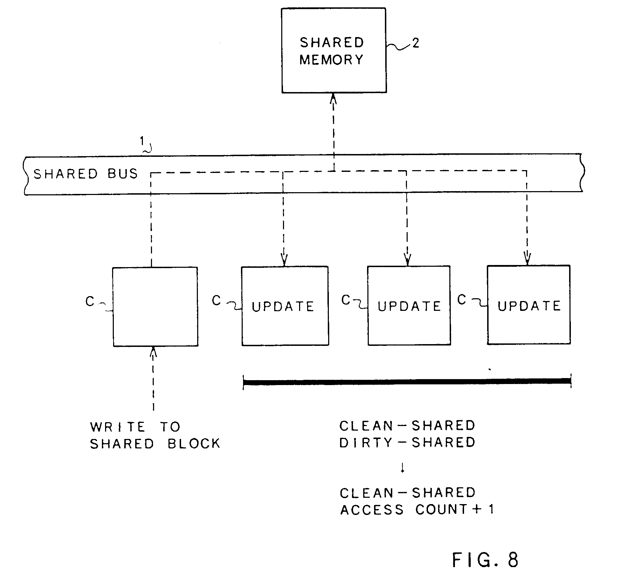

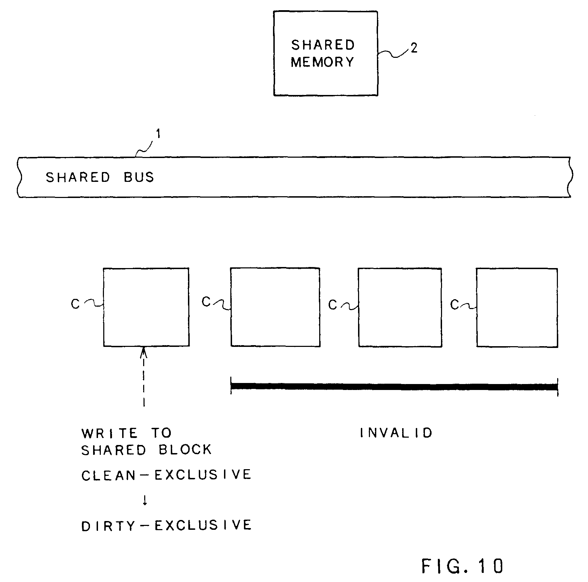

The operations and the effectiveness of the embodiment is summarized as follows. The embodiment operates in the same way as conventional update types for shared blocks which are frequently read/written by a plurality of processors. That is, when write access occurs for each of such shared blocks, the relevant copies stored in a plurality of caches are immediately updated but not invalidated (Figure 8). By contrast, when a shared block which is not frequently accessed by other than one processor P, only the copy in that one processor remains, the copies in the other caches being however invalidated. After the invalidating, that one cache performs operations independently from the others, because the others don't keep the copies( figure 10).

As described above, a snoopy cache C of the embodiment operates at a time in the same way as the update type caches, for shared data which is desired to exist as shared data in that cache at that time. And the snoopy cache operates in the same way as the invalidate type caches, for shared data which is originally not required to be shared data, or likewise operates at a time, for shared data which is preferably shared data in a long span but a single processor preferably performs exclusive read /write operations for efficient performance at that time.

The value M which is a decisive factor for switching between the update and invalidate types is optimized depending the processors P, the block size of the caches, patterns in read write operations in a particular program, etc, and cannot be easily determined. Below, the block size and the characteristics of the program are exemplified, and then how the value M affects the performance is described.
(1) The program is " producer and consumer" model. A producer produces predetermined data configurations sequentially, and write them into a data buffer provided in the shared memory. A consumer reads data configurations from the data buffer and processes them. The producer and consumer are assigned to separate processors P.
(2) The producer and consumer access data word by word.
(3) The block size of the caches is of eight words wide.
(4) The shared bus 1 transfers eight words in one block in the caches C in one cycle time.
(5) Invalidation in caches uses one cycle on the shared bus 1.

Following the above assumption, the system performance is evaluated in terms of the number of cycles consumed on the shared bus, in regard to the two situations below.

### [ Situation 1]

Assume that the producer produces data of 8 words and writes them into the cache C, and consumer thereafter reads and processes the data of 8 words ( the data configuration may be considered as of 8 words). When M=0, the caches operate in the same way as the invalidate type, thereby at the type the producer writes the first word of the 8 words in the producer's cache, the block in the consumer's cache is invalidated. At this time one cycle is consumed on the bus. The remaining 7 words, as a result, exist only in the producer's cache, and the modification of the data occurs in the producer's cache, and thereby the bus 1 is not used. Following that, the consumer tries to read the first word of the 8 words, and then the block of the 8 words is transferred by using 1 cycle on the bus 1. The bus 1 is used by two cycles together. Next, when M=8, the caches operate in the same way as the update type, thereby at the time the producer writes 8 words in series, the bus 1 used 8 times, one time for one word. The consumer's data block has already updated in its cache, and thereby the consumer only reads from its cache without using the bus 1. The bus is used by 8 cycles together, as a result. TABLE 2 shows how many times the bus is used with each M value. In this situation, M=0, that is, the invalidate type achieves the best performance, with twice of the bus use.

**TABLE 2**

| M | Frequency of bus use | | |
|---|---|---|---|
| | Producer | Consumer | Total 0 |
| 0 | 1 | 1 | 2 |
| 1 | 2 | 1 | 3 |
| 2 | 3 | 1 | 4 |
| 3 | 4 | 1 | 5 |
| 4 | 5 | 1 | 6 |
| 5 | 6 | 1 | 7 |
| 6 | 7 | 1 | 8 |
| 7 | 8 | 1 | 9 |
| 8 | 8 | 0 | 8 |

### [ Situation 2]

Assume another situation wherein each time the producer writes one word of data the consumer reads and processes that word. In the case of M=0, when the producer writes the first word of data, the consumer's data block is invalidated with the bus used once. Following that, when the consumer reads the first word of data, it uses the bus once to place in the newest data, since the data in its cache has been invalidated. Further the producer uses the bus 1 once to write the second word of data, and the consumer uses the bus 1 also once to read it. For one block, i.e., 8 words in the caches C, the bus 1 is used 16 (= 2x8) times in total. Next, in the case of M=8, each time the producer write a word the consumer's data block is updated, and thereby the bus is used once. the consumer does not however use the bus 1 during reading operation because the consumer's cache has been already updated. the bus 1 is accordingly used 8 (= 1x8) times. TABLE 3 likewise shows how many times the bus 1 is used with each M value. From this table, this situation causes 8 times of the bus use with M= 1 to 8, and 16 times with M= 0.

**TABLE 3**

| M | Frequency of bus use | | |
|---|---|---|---|
| | Producer | Consumer | Total |
| 0 | 8 | 8 | 16 |
| 1 | 8 | 0 | 8 |
| 2 | 8 | 0 | 8 |
| 3 | 8 | 0 | 8 |
| 4 | 8 | 0 | 8 |
| 5 | 8 | 0 | 8 |
| 6 | 8 | 0 | 8 |
| 7 | 8 | 0 | 8 |
| 8 | 8 | 0 | 8 |

Processing causing only the situation 1 or processing causing only the situation 2 is rare in the practical use. Usual programs cause a variety of situations. Here for the purpose of simplification assume the case where the situations 1 and 2 occur in combination, at one to one ratio. The frequency of the bus 1 used in this case is as shown in TABLE 4 as obtained by summing the TABLEs 2 and 3.

**TABLE 4**

| M | Frequency of bus used |
|---|---|
| 0 | 18 |
| 1 | 11 |
| 2 | 12 |
| 3 | 13 |
| 4 | 14 |
| 5 | 15 |
| 6 | 16 |
| 7 | 17 |
| 8 | 16 |

Following the above assumption, from the TABLE 4 M=1 minimizes the frequency of the bus used, with 11 times. Comparing this with the cases of M=8 and 0 respectively causing the same operations as the update and invalidate types, in which cases the bus is used 16 and 18 times respectively, it is proved that M=1 achieves the best performance.

Of course it can not be ensured that the situations 1 and 2 occurs at a one to one ratio like the above assumption. This invention can however adapt for even situations on both extremes, by setting the M value accordingly.

As described above, the cache controller of this invention operates in the same way as conventional update types for shared blocks which are frequently read/ written by a plurality of processors P. That is, when write access occurs for each such shared block, the relevant copies stored in a plurality of caches are immediately updated but not invalidated. In the contrast, the controller operates in the same way as conventional invalidate types for shared blocks which are not frequently accessed by other than one respective processor P. That is, only the copy in that one processor remains, the copies in the other caches being however invalidated. This invention maximizes the cache performance in terms of the bus traffic, as a result.

Further, since the switching between the protocol types is automatically performed in response to the change of situations, the optimized cache control is achieved. Furthermore since the protocol type can be set for each processor independently, the optimization is achieved for individual processors. Furthermore since the protocol switching is performed by the cache controls, conventional processors and memory control units can be used. Still further since the protocol switching needs not be performed with software such as a compiler or scheduler etc, the conventional software can be used.

There has been described, in a multiprocessor system having a plurality of processors each connected to a shared memory and a shared bus through a corresponding private cache, and further having controllers each provided for each of said private caches, each controller being adapted to monitor signals on said shared bus and, when shared data is modified at one of the other private caches, to perform one of two types of data consistency procedure for said shared data at its private cache, for resolving disaccord of said shared data among said private caches, an improvement wherein each of said private caches comprises:
data control information storage means for storing, for each piece of data stored in its private cache, address information, status information and a count value;
data consistency maintenance procedure determination means for determining, for each piece of shared data by said private cache, the type of data maintenance procedures to be used, based on likelihood that the processor having said private cache accesses said piece of shared data and likelihood that the other processors access said piece of shared data;
consistency maintenance means for performing procedures of the type determined by said determination means, said consistency maintenance means being capable of performing two types of procedures.

Preferably one of said types of procedures is an invalidate type, the procedures of which type, when a shared data is modified at a private cache, change the status of said shared data piece at said private cache into an exclusive status and invalidate said shared data piece or pieces each at the other one or more private caches, the other of said types of procedures being an update type, the procedures of which type, when a shared data piece is modified at a private cache, update accordingly said shared data piece or pieces each at the other one or more private cache, if any, or change the status of said shared data piece at said private cache into an exclusive status if no other private cache has said shared data.

## Claims

1. Cache control system (C) for a private cache (4) in a multiprocessor data processing system comprising a plurality of processors (P1-Pn) each connected to a shared bus (1) via similar private caches (C1-Ch), the cache control system (C) co-operating with similar cache control systems (C1-Cn) provided for other private caches in the data processing system, the cache control system (C) comprising:
a controller (3) for monitoring signals on the shared bus (1) and, when data shared between one of the processors is modified in another cache, for performing one of two types of data consistency procedure for the shared data; and
means for determining the relative likelihood of access to the shared data by the processor corresponding to the private cache and other processors in the system, the type of data consistency procedure performed by the controller being dependent on the results of the determination, said means for determining comprising:
data control information storage means (5) for storing, for each piece of shared data stored in the private cache, a count value; and
means for comparing (7) the count value with a reference value (6);
said controller (3) being adapted for dynamically switching between and performing one or other of said two types of data consistency procedure depending on whether the count value is below a reference value;
the cache control system being characterized by said data control information storage means being adapted to count up and count down by identical amounts such that the count value counts the difference between the number of accesses to the shared piece of data by the processor corresponding to the private cache and the number of accesses to the shared piece of data by other processors in the data processing system.

2. A cache control system (C) as claimed in claim 1 further comprising means for incrementing the count value upon detecting on the shared bus of a signal indicating that the data has been modified at another of the private caches in the data processing system and means for decrementing the count value upon access to the shared data by the processor associated with the cache control system.

3. A cache control system (C) as claimed in claims 1 or 2 wherein when a piece of shared data is modified at one of the other private caches in the multiprocessor data processing system the controller is adapted either to invalidate its copy of the shared data or to modify its copy of the shared data in accordance with the modification to the shared data at the other of the private caches, depending on the result of the determination.

4. Private cache (4) for interconnecting a processor (P) and a shared bus (1) in a multiprocessor data processing system comprising a plurality of processors (P1-Pn) connected to the shared bus (1) by similar private caches, the private cache comprising:
data storage means;
cache control system (C) as claimed in any of claims 1 to 3.

5. Processor (P) capable of co-operating with a shared memory and at least one other similar processor in a multiprocessor data processing system, the processor including a private cache (4) as claimed in claim 4.

6. Multiprocessor data processing system comprising a plurality of processors as claimed in claim 5, a shared bus, and a shared data storage means.

7. A multiprocessor system having a plurality of processors (P1-Pn) each connected to a shared memory (2) and a shared bus (1) through a corresponding private cache (C1-Cn), and further having controllers (3) each provided for each of said private caches (C1-Cn), each controller being adapted to monitor signals on said shared bus (1) and, when shared data is modified at one of the other private caches, to perform one of two types of data consistency procedure for said shared data at its private cache, for resolving disaccord of said shared data among said private caches, wherein each of said controllers (3) comprises:
data control information storage means (5) for storing, for each piece of data stored in its private cache, address information of said data piece, status information of said data piece, and a count value;
said multiprocessor system being characterized by each of said controllers further comprising :
means for incrementing the count value upon a first type of access to a piece of shared data;
means for decrementing the count value upon a second type of access to said piece of shared data, such that the count value counts the difference between the number of accesses of the first and second types;
reference value storage means (6) for storing a reference value related to said count value;
comparison means (7) for comparing between said count value and said reference value; and
consistency maintenance means (3) for dynamically switching between and performing one or other of said two types of data consistency maintenance procedure depending upon the result from said comparison means and said status information relating said piece of shared data.

8. A multiprocessor system as claimed in claim 7 wherein said count value has an upper and lower limits, each of the controllers further comprising means for decrementing the count value by one upon access to shared data at its private cache, and means for incrementing the count value by one upon detecting on said shared bus a signal indicative that shared data is modified at another private cache.

9. A multiprocessor system as claimed in claim 8 further comprising means for setting the reference value to said upper limit.

10. A multiprocessor system as claimed in any of claims 7, 8 or 9 wherein the consistency maintenance means of each private cache, further comprises means for invalidating and modifying being adapted when a piece of shared data is modified by one of said other private caches, to invalidate its copy of said piece of shared data in response to a coincident signal from said comparison means and to modify its copy of said piece of shared data accordingly and to keep the status information to indicate as shared in response to a discordant signal.

## Patentansprüche

1. Cache-Steuerungsanordnung (C) für einen privaten Cache (4) in einem Mehrrechner-Datenverarbeitungssystem, das eine Vielzahl von Rechnern (P1-Pn) enthält, von denen jeder über ähnliche private Caches (C1-Ch) mit einem gemeinsamen Bus (1) verbunden ist, wobei die Cache-Steuerungsanordnung (C), die mit ähnlichen Cache-Steuerungsanordnungen (C1-Cn), die für andere private Caches im Datenverarbeitungssystem bereitgestellt werden, zusammenarbeitet, wobei die Cache-Steuerungsanordnung (C) enthält:
eine Steuerung (3), um die Signale im gemeinsamen Bus (1) zu überwachen, und, wenn Daten, die zwischen einem der Rechner gemeinsam benutzt werden, in einem anderen Cache geändert werden, eines von zwei Verfahren zur Erhaltung der Datenkonsistenz der gemeinsamen Daten auszuführen; und
Mittel, um die relative Wahrscheinlichkeit des Zugriffs auf die gemeinsamen Daten durch den Rechner zu bestimmen, der dem privaten Cache und anderen Rechnern im System entspricht, wobei die Art des Datenkonsistenzverfahrens, das von der Steuerung ausgeführt wird, von den Ergebnissen der Bestimmung abhängig ist; und Mittel zur Bestimmung mit:
Mitteln zur Speicherung von Datensteuerungsinformationen (5), um für jeden Teil von gemeinsamen Daten, die in dem privaten Cache gespeichert sind, einen Zählwert zu speichern; und
Mittel, um den Zählwert mit einem Referenzwert (6) zu vergleichen (7);
die Steuerung (3) angepaßt ist, um zwischen einer der beiden Arten des Datenkonsistenzverfahrens hin- und herzuschalten und eines auszuführen, was davon abhängt, ob der Zählwert niedriger als ein Referenzwert ist;
die Cache-Steuerungsanordnung dadurch gekennzeichnet ist, daß die Mittel zur Speicherung von Datensteuerungsinformationen angepaßt sind, um je nachdem identische Summen zu inkrementieren oder zu dekrementieren, so daß der Zählwert die Differenz zwischen der Anzahl von Zugriffen auf den gemeinsamen Datenteil durch den Rechner, der dem privaten Cache entspricht, zählt und der Anzahl von Zugriffen auf den gemeinsamen Datenteil durch andere Rechner im Datenverarbeitungssystem.

2. Eine Cache-Steuerungsanordnung (C) gemäß Anspruch 1, die außerdem Mittel enthält, um den Zählwert, nachdem im gemeinsamen Bus ein Signal erkannt wurde, das angibt, daß die Daten in einem anderen der privaten Caches im Datenverarbeitungssystem geändert worden sind, zu inkrementieren, und Mittel, um den Zählwert nach Zugriff auf die gemeinsamen Daten durch den Rechner, der zu der Cache-Steuerungsanordnung gehört, zu dekrementieren.

3. Eine Cache-Steuerungsanordnung (C) gemäß Anspruch 1 oder 2, wobei, wenn ein Teil der gemeinsamen Daten in einem der anderen privaten Caches im Mehrrechner-DatenverarbeitungsSystem geändert wird, die Steuerung angepaßt wird, um ihre Kopie mit den gemeinsamen Daten entweder zu annullieren oder ihre Kopie mit den gemeinsamen Daten gemäß der Änderung in den gemeinsamen Daten in dem anderen der privaten Caches zu ändern, was von dem Ergebnis der Bestimmung abhängt.

4. Privater Cache (4), um einen Rechner (P) und einen gemeinsamen Bus (1) in einem Mehrrechner-Datenverarbeitungssystem anzuschließen, das eine Vielzahl von Rechnern (P1-Pn) enthält, die mit dem gemeinsamen Bus (1) durch ähnliche private Caches verbunden sind, wobei der private Cache enthält:
Datenspeichermittel;
Cache-Steuerungsanordnung (C) gemäß den Ansprüchen 1 bis 3.

5. Rechner (P), der mit einem gemeinsamen Speicher und wenigstens einem anderen ähnlichen Rechner in einem Mehrrechner-Datenverarbeitungssystem zusammenarbeiten kann, das einen privaten Cache (4) gemäß Anspruch 4 enthält.

6. Mehrrechner-Datenverarbeitungssystem mit einer Vielzahl von Rechnern gemäß Anspruch 5, einem gemeinsamen Bus und einem gemeinsamen Datenspeichermittel.

7. Ein Mehrrechner-Datenverarbeitungssystem, das eine Vielzahl von Rechnern (P1-Pn) hat, von denen jeder über einen entsprechenden privaten Cache (C1-Cn) mit einem gemeinsamen Speicher (2) und einem gemeinsamen Bus (1) verbunden ist, und das außerdem Steuerungen (3) hat, die für jeden der privaten Caches (C1-Cn) bereitgestellt werden, wobei jede Steuerung angepaßt ist, um Signale in dem gemeinsamen Bus (1) zu überwachen, und, wenn gemeinsame Daten in einem der anderen privaten Caches geändert werden, eine der beiden Arten des Datenkonsistenzverfahrens für die gemeinsamen Daten in seinem privaten Cache auszuführen, um Unstimmigkeiten bei den gemeinsamen Daten in den privaten Caches zu beheben, wobei die Steuerungen enthalten:
Mittel zur Speicherung von Datensteuerungsinformationen (5), um für jeden Datenteil, der in seinem privaten Cache gespeichert ist, Adreßinformationen, Statusinformationen von diesem Datenteil und einen Zählwert zu speichern;
Das Mehrrechnersystem wird dadurch gekennzeichnet, daß jede der Steuerungen außerdem enthält:
Mittel, um den Zählwert nach einer ersten Art des Zugriffs auf einen gemeinsamen Datenteil zu inkrementieren;
Mittel, um den Zählwert nach einer zweiten Art des Zugriffs auf den gemeinsamen Datenteil zu dekrementieren, so daß der Zählwert die Differenz zwischen der Anzahl der Zugriffe der ersten und zweiten Art zählt;
Mittel zur Speicherung des Referenzwerts (6), um einen Referenzwert bezogen auf den Zählwert zu speichern;
Vergleichsmittel (7), um den Zählwert mit dem Referenzwert zu vergleichen; und
Mittel zur Erhaltung der Datenkonsistenz (3) zum dynamischen Hin- und Herschalten und um die eine oder die andere Art der Verfahren zur Erhaltung der Datenkonsistenz auszuführen, was von dem Ergebnis der Vergleichsmittel und der Statusinformation bezogen auf den gemeinsamen Datenteil abhängt.

8. Ein Mehrrechnersystem gemäß Anspruch 7, wobei der Zählwert obere und untere Grenzen enthält, und jede der Steuerungen außerdem Mittel enthält, um den Zählwert nach Zugriff auf die gemeinsamen Daten in seinem privaten Cache um eins zu dekrementieren, und Mittel, um den Zählwert um eins zu inkrementieren, nachdem in dem gemeinsamen Bus ein Signal erkannt wurde, das darauf hinweist, daß die gemeinsamen Daten in einem anderen privaten Cache geändert wurden.

9. Ein Mehrrechnersystem gemäß Anspruch 8, das außerdem Mittel enthält, um den Referenzwert auf die obere Grenze einzustellen.

10. Ein Mehrrechnersystem gemäß den Ansprüchen 7, 8 oder 9, wobei die Mittel zur Erhaltung der Konsistenz von jedem privaten Cache des weiteren Annullierungs- und Änderungsmittel enthalten, die angepaßt werden, wenn ein gemeinsamer Datenteil von einem der anderen privaten Caches geändert wird, und um seine Kopie des gemeinsamen Datenteils als Reaktion auf ein übereinstimmendes Signal von diesen Vergleichsmitteln zu annullieren, und um seine Kopie des gemeinsamen Datenteils dementsprechend zu ändern, und die Statusinformation zu behalten, um diese als Reaktion auf ein nicht übereinstimmendes Signal als gemeinsam anzugeben.

## Revendications

1. Système de commande d'antémémoire (C) pour une antémémoire privée (4) dans un système de traitement de données à multiprocesseur comprenant une pluralité de processeurs (P1 à Pn) chacun relié à un bus partagé (1) via des antémémoires privées similaires (C1 à Ch), le système de commande d'antémémoire (C) coopérant avec des systèmes de commande d'antémémoire similaires (C1 à Cn) prévus pour les autres antémémoires privées dans le système de traitement de données, le système de commande d'antémémoire (C) comprenant :
un contrôleur (3) pour surveiller les signaux sur le bus partagé (1) et, lorsque les données partagées entre un des processeurs sont modifiées dans une autre antémémoire, pour effectuer un des deux types de procédures de cohérence de données pour les données partagées ; et
un moyen pour déterminer la vraisemblance relative de l'accès aux données partagées par le processeur correspondant à l'antémémoire privée et aux autres processeurs dans le système, le type de procédure de cohérence de données effectuée par le contrôleur est en fonction des résultats de la détermination, ledit moyen pour la détermination comprenant :
un moyen de mémorisation d'informations de commande de données (5) pour mémoriser, pour chaque ensemble de données partagées mémorisé dans l'antémémoire privée, une valeur de compte, et
un moyen pour comparer (7) la valeur de compte à une valeur de référence (6) ;
ledit contrôleur (3) étant conçu pour commuter dynamiquement entre et effectuer l'un ou l'autre desdits types de procédures de cohérence de données en fonction du fait que la valeur de compte est au-dessous d'une valeur de référence ;
le système de commande d'antémémoire étant caractérisé par ledit moyen de mémorisation et d'informations de commande de données étant conçu pour compter et décompter par des quantités identiques de sorte que la valeur de compte compte la différence entre le nombre d'accès à l'ensemble de données partagées par le processeur correspondant à l'antémémoire privée et le nombre d'accès à un ensemble de données partagées par les autres processeurs dans le système de traitement de données.

2. Système de commande d'antémémoire (C) selon la revendication 1, comprenant de plus un moyen pour incrémenter la valeur de compte sur la détection que sur le bus partagé est présent un signal indiquant que les données ont été modifiées au niveau d'une autre des antémémoires privées dans le système de traitement de données et un moyen pour décrémenter la valeur de compte sur accès aux données partagées par le processeur associé au système de commande d'antémémoire.

3. Système de commande d'antémémoire (C) selon la revendication 1 ou 2, dans lequel ledit ensemble de données partagées est modifié au niveau d'une des autres antémémoires privées dans le système de traitement de données à multiprocesseurs, le contrôleur est conçu pour soit invalider sa copie de données partagées, soit modifier sa copie de données partagées en conformité avec la modification effectuée sur les données partagées au niveau de l'autre des antémémoires, en fonction du résultat de la détermination.

4. Antémémoire privée (4) pour interconnecter un processeur (P) et un bus partagé (1) dans un système de traitement de données à multiprocesseurs comprenant une pluralité de processeurs (P1 à Pn) reliés au bus partagé (1) par des antémémoires privées similaires, l'antémémoire privée comprenant :
un moyen de mémorisation de données ;
un système de commande d'antémémoire (C) selon l'une quelconque des revendications 1 à 3.

5. Processeur (P) capable de coopérer avec une mémoire partagée et au moins un autre processeur similaire dans un système de traitement de données à multiprocesseurs, le processeur incluant une antémémoire privée (4) selon la revendication 4.

6. Système de traitement de données à multiprocesseurs comprenant une pluralité de processeurs selon la revendication 5, un bus partagé et un moyen de mémorisation de données partagées.

7. Système à multiprocesseurs ayant une pluralité de processeurs (P1 à Pn) chacun relié à une mémoire partagée (2) et à un bus partagé (1) par l'intermédiaire d'une antémémoire privée correspondante (C1 à Cn) et ayant de plus des contrôleurs (3) chacun prévu pour chacune desdites antémémoires privées (C1 à Cn), chaque contrôleur étant conçu pour surveiller les signaux sur ledit bus partagé (1) et lorsque les données partagées sont modifiées au niveau d'une des autres antémémoires, effectuer l'un des deux types de procédures de cohérence de données pour lesdites données partagées au niveau de son antémémoire privée, pour résoudre le désaccord desdites données partagées entre lesdites antémémoires privées, dans lequel chacun desdits contrôleur (3) comprend :
un moyen de mémorisation d'informations de commande de données (5) pour mémoriser, pour chaque ensemble de données mémorisé dans son antémémoire privée, des informations d'adresse dudit ensemble de données, des informations d'état dudit ensemble de données et une valeur de compte ;
ledit système à multiprocesseurs étant caractérisé en ce que chacun desdits contrôleurs comprend de plus :
un moyen pour incrémenter la valeur de compte lors d'un premier type d'accès audit ensemble de données partagées ;
un moyen pour décrémenter la valeur de compte lors d'un second type d'accès audit ensemble de données partagées, de sorte que la valeur de compte compte la différence entre le nombre d'accès des premier et second types ;
un moyen de mémorisation de valeur de référence (6) pour mémoriser une valeur de référence liée à ladite valeur de compte ;
un moyen de comparaison (7) pour comparer entre ladite valeur de compte et ladite valeur de référence ; et
un moyen de maintenance de cohérence (3) pour commuter dynamiquement entre et effectuer l'un ou l'autre des deux types de procédures de maintenance de cohérence de données en fonction du résultat dudit moyen de comparaison et desdites informations d'état se rapportant audit ensemble de données partagées.

8. Système à multiprocesseurs selon la revendication 7, dans lequel la valeur de compte a des limites supérieure et inférieure, chacun des contrôleurs comprenant de plus un moyen pour décrémenter la valeur de compte d'un sur accès aux données partagées au niveau de son antémémoire privée et un moyen pour incrémenter la valeur de compte d'un lors de la détection sur ledit bus partagé d'un signal représentatif que les données partagées sont modifiées au niveau d'une autre antémémoire privée.

9. Système à multiprocesseurs selon la revendication 8, comprenant de plus un moyen pour établir la valeur de référence à ladite limite supérieure.

10. Système à multiprocesseurs selon l'une quelconque des revendications 7, 8 ou 9, dans lequel le moyen de maintenance de cohérence de chaque antémémoire privée comprend de plus un moyen étant conçu pour invalider et modifier lorsqu'un ensemble de données partagées est modifié par une desdites autres antémémoires privées afin d'invalider sa copie dudit ensemble de données partagées en réponse à un signal de coïncidence provenant dudit moyen de comparaison et de modifier sa copie de l'ensemble de données partagées en conséquence et pour conserver les informations d'état pour indiquer comme partagées en réponse à un signal discordant.
